# EUROPEAN PATENT APPLICATION

(11) **EP 4 767 811 A1**
(43) Date of publication of application: **01.07.2026**
(21) Application number: 24899475.8
(22) Date of filing: 17.10.2024
(51) Int. Cl.: A01D 43/063

(54) **CONTROL METHOD AND CONTROL APPARATUS FOR GRASS COLLECTING APPARATUS, AND ELECTRONIC DEVICE**

(30) Priority: 09.12.2023 CN 202311692170
(71) Applicant: Shenzhen Mammotion Innovation Co., Limited, Shenzhen, Guangdong 518000 (CN)
(72) Inventor: WEI, Jidong, Shenzhen, Guangdong 518000 (CN); XU, Yuanjun, Shenzhen, Guangdong 518000 (CN)
(74) Representative: Huang, Liwei
(86) International application number: PCT/CN2024/125517
(87) International publication number: WO 2025/118831

(57) **Abstract**

The present disclosure discloses a method and a control device for controlling a grass collection apparatus, and an electronic device. The method for controlling a grass collection apparatus comprising: controlling, in response to the unloading instruction, a grass collection box to move from a first position to a second position along a first direction, wherein the first position corresponds to a closed state of the grass collection box, and the second position corresponds to a maximum opening angle of the grass collection box; and controlling the grass collection box to swing based on a swing parameter, wherein the swing parameter comprises at least a swing angle, and the swing angle is less than the maximum opening angle. By adopting the method for controlling the grass collection apparatus of the present disclosure, after the grass collection box is raised, most grass clippings are unloaded, and during the swing process of the grass collection box, inertial forces in different directions can be generated, so that a small part of remaining grass clippings is removed by vibration, thereby avoiding incomplete grass unloading, improving grass unloading efficiency and grass unloading effect, and saving manual feeding operations.

## Description

The present application claims priority to Chinese Patent Application No. 202311692170.6, filed with the China National Intellectual Property Administration on December 09, 2023, titled "METHOD AND CONTROL DEVICE FOR CONTROLLING A GRASS COLLECTION APPARATUS, AND ELECTRONIC DEVICE", the entire content of which is incorporated herein by reference.

### TECHNICAL FIELD

The present disclosure relates to the field of garden tools, and particularly to a method and a control device for controlling a grass collection apparatus, and an electronic device.

### BACKGROUND

A grass collection box of a grass collection apparatus is configured to temporarily storing grass clippings cut by a lawn mowing device. The existing art generally flips the grass collection box through a flipping mechanism to complete a grass clipping dumping action. However, in the existing grass collection apparatus, some grass clippings still remain in the grass collection box during the grass unloading process, the grass unloading effect is poor, and manual feeding operation is required, which reduces the grass unloading efficiency.

### SUMMARY

In view of the above, an object of the present disclosure is to provide a grass collection apparatus, a control method thereof, an electronic device, and a non-transitory computer-readable storage medium, so as to solve at least one technical problem in the prior art of low grass unloading efficiency or poor grass unloading performance.

In a first aspect, an embodiment of the present disclosure provides a method for controlling a grass collection apparatus, comprising the following steps: receiving an unloading instruction; controlling, in response to the unloading instruction, a grass collection box to move from a first position to a second position along a first direction, wherein the first position corresponds to a closed state of the grass collection box, and the second position corresponds to a maximum opening angle of the grass collection box; and controlling the grass collection box to swing based on a swing parameter, wherein the swing parameter comprises at least a swing angle, and the swing angle is less than the maximum opening angle.

In a second aspect, an embodiment of the present disclosure provides a control device for controlling a grass collection apparatus, comprising an obtaining unit and a control unit. The control unit is connected to the obtaining unit. The control unit is configured to: obtain a grass unloading instruction; control, based on the grass unloading instruction, a grass collection box to perform an opening movement along a first direction from a first position toward a second position; wherein the first position is a position where the grass collection box is in a closed state, and the second position is a position where the grass collection box reaches a maximum opening angle. The control unit is further configured to control the grass collection box to swing according to a swing parameter; wherein the swing parameter comprises a swing angle, and the swing angle is smaller than the maximum opening angle.

In a third aspect, an embodiment of the present disclosure provides an electronic device, comprising a processor and a memory, the processor and the memory being connected to each other, wherein the memory is configured to store a computer program, the computer program comprises program instructions, and the processor is configured to call the program instructions to perform the control method as described above.

In a fourth aspect, an embodiment of the present disclosure provides a non-transitory computer-readable storage medium, wherein the non-transitory computer-readable storage medium stores a computer program, the computer program comprises program instructions, and the program instructions, when executed by a processor, cause the processor to perform the control method as described above.

According to the method and control device of the grass collection apparatus, the electronic device, and the non-transitory computer-readable storage medium provided by the embodiments of the present disclosure, on one hand, the opening movement of the grass collection box of the grass collection apparatus is triggered based on the grass unloading instruction, so that most grass clippings in the grass collection box are automatically unloaded under the action of gravity; on the other hand, after the opening movement is completed, the grass collection box is controlled to swing according to a preset angle based on a swing instruction, so that inertial forces in different directions are generated during the reciprocating rotation of the grass collection box, and shaking of the grass collection box is realized through the inertial forces, so that the grass clippings attached in the grass collection box can be quickly shaken off, avoiding incomplete grass unloading, improving grass unloading efficiency and grass unloading effect, and thereby saving manual feeding operations.

### BRIEF DESCRIPTION OF THE DRAWINGS

To describe the technical solutions in the embodiments of the present disclosure or in the existing art more clearly, the drawings required for describing the embodiments or the existing art will be briefly introduced below. Apparently, the drawings described below are only some embodiments of the present disclosure. For those of ordinary skill in the art, other drawings can also be obtained based on these drawings without creative labor.
FIG.1 is a schematic flowchart of a control method of a grass collection apparatus according to an embodiment of the present disclosure.
FIG.2A to FIG.2E are schematic diagrams of a grass unloading process of a grass collection apparatus according to different embodiments of the present disclosure.
FIG.3 is a structural schematic diagram of a grass collection system according to an embodiment of the present disclosure.
FIG.4 is a partial structural schematic diagram of a grass collection apparatus in a closed state according to an embodiment of the present disclosure.
FIG.5 is a partial structural schematic diagram of a grass collection apparatus in an open state according to an embodiment of the present disclosure.
FIG.6 is a block diagram of unit composition of a control device of a grass collection apparatus according to an embodiment of the present disclosure.
FIG.7 is a block diagram of unit composition of an electronic device according to an embodiment of the present disclosure.

Description of main reference numerals:
lawn mowing system-1000; lawn mowing device-100; machine body-11; grass collection apparatus-200; main body-10; accommodating cavity-12; rotating structure-14; grass collection box-20; grass collection mechanism-30; flipping mechanism-40; rotating shaft-41; push rod-42; pointer-43; driving mechanism-50; driving member-51; worm gear-52; worm-53; sensing member-80; first sensing member-810; second sensing member-820; first sensor-81; second sensor-82; third sensor-83; control device-300; obtaining unit-301; control unit-302; processing unit-303; electronic device-500; processor-510; memory-520; communication interface-530; bus-540.

The following specific implementations will further describe the present disclosure in conjunction with the above drawings.

### DESCRIPTION OF EMBODIMENTS

The technical solutions in the embodiments of the present disclosure will be described clearly and completely below in conjunction with the drawings in the embodiments of the present disclosure. Apparently, the described embodiments are only a part of the embodiments of the present disclosure, not all of them. All other embodiments obtained by those of ordinary skill in the art based on the embodiments in the present disclosure without creative labor fall within the protective scope of the present disclosure.

It can be understood that the terms in the specification and claims of the present disclosure and the above drawings are only for describing specific embodiments and are not intended to limit the present disclosure. The terms "first", "second", etc. in the specification and claims of the present disclosure and the above drawings are used to distinguish different objects, but not to describe a specific order. Unless otherwise clearly expressed in the context, the singular forms "a", "an", and "the" are also intended to include plural forms. The term "comprising" and any variations thereof are intended to cover non-exclusive inclusion. For example, a process, method, system, product, or device comprising a series of steps or units is not limited to the listed steps or units, but optionally further comprises unlisted steps or units, or optionally further comprises other steps or units inherent to these processes, methods, products, or devices. In addition, the present disclosure can be implemented in many different forms and is not limited to the embodiments described in this embodiment. The purpose of providing the following specific embodiments is to facilitate a clearer and more thorough understanding of the disclosure of the present disclosure, wherein words indicating orientation such as top, bottom, left, right, etc. are only for the positions of the shown structures in the corresponding drawings. In the description of the present disclosure, it should be noted that unless otherwise clearly specified and defined, the terms "installation", "connection", "connected", "disposed on" should be understood in a broad sense, for example, it can be a fixed connection, a detachable connection, or an integral connection; it can be a mechanical connection; it can be a direct connection, or an indirect connection through an intermediate medium, and it can be internal communication between two elements. For those of ordinary skill in the art, the specific meanings of the above terms in the present disclosure can be understood in specific situations.

The subsequent descriptions in the specification describe preferred embodiments for implementing the present disclosure; however, the above descriptions are for the purpose of illustrating the general principles of the present disclosure and are not intended to limit the scope of the present disclosure. The protective scope of the present disclosure shall be determined by the attached claims.

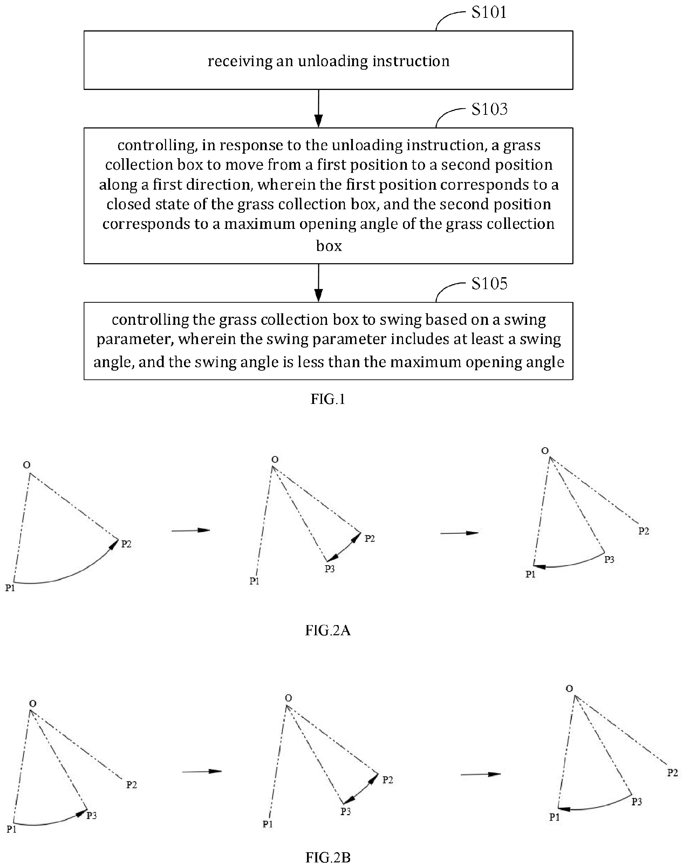

Please refer to FIG.1. FIG.1 is a schematic flowchart of a control method of a grass collection apparatus according to an embodiment of the present disclosure. The control method of the grass collection apparatus may include the following steps S101 to S105.

Step S101, receiving an unloading instruction.

In a possible implementation, upon the lawn mowing device completing a lawn mowing task, generating the grass unloading instruction. After the lawn mowing device completes the lawn mowing task, the lawn mowing device sends the grass unloading instruction to a control unit of the grass collection apparatus to implement a grass unloading task of the grass collection apparatus. Completing the lawn mowing task may include the lawn mowing device stopping the lawn mowing task; or, the lawn mowing device completing the lawn mowing task in a designated area; or, grass clippings collected in a grass collection box reaching a preset amount, etc., which is not limited in the embodiments of the present disclosure.

In a possible implementation, upon a detector detecting that a grass collection parameter of the grass collection box satisfies a preset parameter, generating the grass unloading instruction. The detector comprises, but is not limited to: a visual detector, a pressure detector, a gravity sensor, etc. The grass collection parameter comprises, but is not limited to: one or more of a collection volume, a collection weight, or a collection height. For example, when the detector is a visual detector, the visual detector can obtain image data of the grass collection box, and determine whether the grass clippings collected in the grass collection box reach a preset amount based on the image data. Thus, based on the grass clippings collected in the grass collection box reaching the preset amount, the grass collection apparatus is triggered to generate the grass unloading instruction.

In a possible implementation, the grass unloading instruction can also be triggered by a user. For example, the grass collection apparatus can generate the grass unloading instruction responsive to an opening operation for a grass unloading switch by the user. Thus, flexibility of the grass unloading operation of the grass collection apparatus is improved.

In a possible implementation, the grass unloading instruction can also be jointly determined by the grass collection apparatus and the user. For example, after the grass collection apparatus initially determines that the grass collection box needs to perform the grass unloading operation according to the above manner, a prompt message is sent to the user, and then the user confirms whether to perform the grass unloading operation for the grass collection box. The prompt message is used to prompt the user whether to start the grass unloading operation of the grass collection box. The prompt message may include one or more of a sound signal, an optical signal, text information, or vibration information, which is not limited in the embodiments of the present disclosure.

Step S103, controlling, in response to the unloading instruction, a grass collection box to move from a first position to a second position along a first direction, wherein the first position corresponds to a closed state of the grass collection box, and the second position corresponds to a maximum opening angle of the grass collection box.

Working modes of the grass collection apparatus include a grass collection mode and a grass unloading mode. In the grass collection mode, the grass collection box is in a closed state, so that the grass collection box can be configured to temporarily storing grass clippings cut by the lawn mowing device. After receiving the grass unloading instruction, the grass collection apparatus triggers the opening movement of the grass collection box, so that the grass collection box is in the grass unloading mode. In the grass unloading mode, the grass collection box is flipped and is in an open state, so as to dump the grass clippings collected in the grass collection box, so that the grass clippings in the grass collection box can fall from the tilted grass collection box under the action of gravity. It can be understood that the larger the opening angle of the grass collection box, the better the dumping effect of the grass clippings. Wherein, a range of the maximum opening angle of the grass collection box is 30° to 70°. The maximum opening angle of the grass collection box can be, but is not limited to: 30°, 35°, 40°, 45°, 50°, 55°, 60°, 65°, 70°, etc. Exemplarily, in this embodiment, the maximum opening angle of the grass collection box is 60°. Based on the grass collection box rotating to the first position, the opening angle of the grass collection box is 0°; based on the grass collection box rotating to the second position, the opening angle of the grass collection box is 60°, at which time the grass collection box is opened to the maximum angle, so that the grass clippings can be dumped out of the grass collection box more effectively under the action of gravity.

In a possible implementation, the controlling, in response to the unloading instruction, a grass collection box to move from a first position to a second position along a first direction comprises: controlling the grass collection box to rotate from the first position to the second position along the first direction. Thus, the grass collection box is opened to the maximum angle, so that the grass clippings can be dumped out of the grass collection box more effectively under the action of gravity, and a movement amount of a subsequent swing of the grass collection box is reduced, power consumption is reduced; in addition, based on the grass collection box flipping to an extreme position, the grass collection box can be hit to cause vibration, so as to better shake out the grass clippings in the grass collection box.

In a possible implementation, the controlling, in response to the unloading instruction, a grass collection box to move from a first position to a second position along a first direction comprises: controlling the grass collection box to rotate from the first position to a third position along the first direction; wherein the third position is located between the first position and second position and is different from both the first position and the second position. Thus, the grass collection apparatus can perform a swing after the grass collection box is opened by a preset angle, which not only can effectively dump the grass clippings out of the grass collection box under the action of gravity and shaking, improving the grass unloading effect and grass unloading efficiency, but also can facilitate rational control of a swing range of the grass collection box below the second position, so as to avoid damaging the grass collection box, the driving mechanism, or other components due to the grass collection box exceeding the flipping extreme position under the action of different inertial forces.

Step S105, controlling the grass collection box to swing based on a swing parameter.

In a possible implementation, upon determining that the grass collection box is at a swing starting position, controlling the grass collection box to swing based on the swing parameter. Wherein, the swing starting position can be configured as the second position or the third position.

After the grass collection apparatus receives the grass unloading instruction, the grass collection box can be controlled to rotate directly from the first position to the swing starting position. For example, based on the swing starting position being configured as the second position, the grass collection apparatus controls, based on the grass unloading instruction, the grass collection box to rotate along the first direction from the first position to the second position. Based on the swing starting position being configured as the third position, the grass collection apparatus controls, based on the grass unloading instruction, the grass collection box to rotate along the first direction from the first position to the third position; or, the grass collection apparatus first controls, based on the grass unloading instruction, the grass collection box to rotate along the first direction from the first position to the second position, and then controls the grass collection box to rotate along a second direction from the second position to the third position, wherein the second direction is opposite to the first direction.

It should be noted that the position of the grass collection box can be detected based on a sensor, and can also be determined through a rotation parameter of the grass collection apparatus, for example, it can be calculated according to parameters such as an operation speed and time of the driving mechanism. Exemplarily, in this embodiment, the sensor may be a Hall sensor, so as to simplify the program instructions of the grass collection apparatus and reduce the management difficulty. In some embodiments, the sensor may also include, but is not limited to: a distance sensor, an optocoupler sensor, a pressure sensor, an angle sensor, etc. The distance sensor comprises, but is not limited to: a displacement sensor, a proximity sensor, an ultrasonic sensor, etc.

In a possible implementation, the upon determining that the grass collection box is at a swing starting position comprises: judging whether the grass collection box rotates to the second position; in response to detecting that the grass collection box has rotated to the second position, determining that the grass collection box is located at the swing starting position.

In a possible implementation, the upon determining that the grass collection box is at a swing starting position comprises: judging whether the grass collection box rotates to the second position; in response to detecting that the grass collection box has rotated to the second position, controlling the grass collection box to rotate along a second direction from the second position to a third position; and in response to detecting that the grass collection box has rotated to the third position, determining that the grass collection box is at the swing starting position.

In a possible implementation, the determining that the upon determining that the grass collection box is at a swing starting position comprises: judging whether the grass collection box rotates to the second position; in response to failing to detect that the grass collection box has rotated to the second position and upon detecting that the grass collection box has rotated to the third position, determining that the grass collection box is located at the swing starting position.

In a possible implementation, upon receiving an opening operation of the swing switch by a user, determining that the grass collection box is at the swing starting position.

In a possible implementation, based on the grass collection apparatus being located at the swing starting position and responsive to an opening operation for the swing switch by the user, the grass collection box is controlled to swing according to the swing parameter. Thus, flexibility of the grass unloading operation of the grass collection apparatus is improved. For example, when the grass collection apparatus initially detects that the grass collection box is located at the swing starting position according to the above manner, a prompt message is sent to the user, and then the user confirms whether to perform the swing operation for the grass collection box. The prompt message is used to prompt the user whether to start the swing operation of the grass collection box. The prompt message may include one or more of a sound signal, an optical signal, text information, or vibration information, which is not limited in the embodiments of the present disclosure.

The controlling the grass collection box to swing based on a swing parameter comprises: determining a swing range based on the swing starting position and the swing angle; and controlling the grass collection box to swing within the determined swing range.

Wherein, the swing angle can be customized by a user or preset by default at a factory of the grass collection apparatus. A range of the swing angle is 3° to 45°. The swing angle can be, but is not limited to: 3°, 5°, 10°, 15°, 20°, 25°, 30°, 35°, 40°, or 45°. It can be understood that when the swing angle is too large, energy consumption of the grass collection apparatus is increased; when the swing angle is too small, the driving mechanism and the grass collection box are easily damaged. Exemplarily, in this embodiment, the swing angle is 10°, so as to take into account smoothness of the grass collection box in swinging, and ensure that the grass clippings can be shaken off from the grass collection box under the action of inertial forces in different directions, while saving energy consumption of the driving mechanism and prolonging service life of the driving mechanism and the grass collection box. It should be noted that the swing angle is only configured to explanation, and the swing angle can be determined based on factors such as a maximum opening angle of the grass collection box and a residual amount of grass clippings in the grass collection box. In some embodiments, the swing range can also be preset by the user. Methods set by the user include, but are not limited to: setting multiple sensors in an opening and closing area of the grass collection apparatus. The swing range for user pre-setting is determined by detecting the position of the grass collection box through the sensors. It can be understood that in some embodiments, the swing parameter may also include, but is not limited to: a swing speed, a number of times of swinging, etc.

In a possible implementation, the controlling the grass collection box to swing within the determined swing range comprises: controlling the grass collection box to swing between the second position and a third position. Thus, the grass collection box can be opened to the maximum angle. On one hand, the grass clippings can be dumped out of the grass collection box more effectively under the action of gravity and inertial forces in different directions of the grass collection box; on the other hand, the grass collection apparatus can implement opening movement, swinging, and closing movement between the first position, the second position, and the third position, which reduces the difficulty of grass unloading management of the grass collection apparatus, simplifies program instructions of the grass collection apparatus, reduces costs, and improves grass unloading efficiency and rate. When receiving a closing instruction, the grass collection apparatus controls the grass collection box to rotate from the third position to the first position.

Wherein, one boundary of the swing range coincides with the second position, and one boundary of the swing range is spaced apart from the first position. Specifically, please refer to FIG.2A. When receiving a grass unloading instruction, the grass collection apparatus controls, based on the grass unloading instruction, the grass collection box to rotate along the first direction from the first position P1 to the second position P2. When detecting that the grass collection box rotates to the second position P2, the grass collection apparatus controls the grass collection box to swing between the second position P2 and the third position P3. Please refer to FIG.2B. When receiving a grass unloading instruction, the grass collection apparatus controls, based on the grass unloading instruction, the grass collection box to rotate along the first direction from the first position P1 to the third position P3. When detecting that the grass collection box rotates to the third position P3, the grass collection apparatus controls the grass collection box to swing between the third position P3 and the second position P2. Finally, the grass collection apparatus controls the grass collection box to perform a closing movement, that is, rotating from the third position P3 to the first position P1; or, controlling the grass collection box to rotate from the second position P2 to the first position P1.

In a possible implementation, the controlling the grass collection box to swing within the determined swing range comprises: controlling the grass collection box to swing between a third position and a fourth position; wherein the fourth position is between the second position and the third position or between the first position and the third position. Thus, the swing of the grass collection box is controlled between the first position and the second position, so as to avoid damaging the grass collection box, the driving mechanism, or other components due to the grass collection box exceeding the flipping extreme position under the action of different inertial forces during the swing process of the grass collection box.

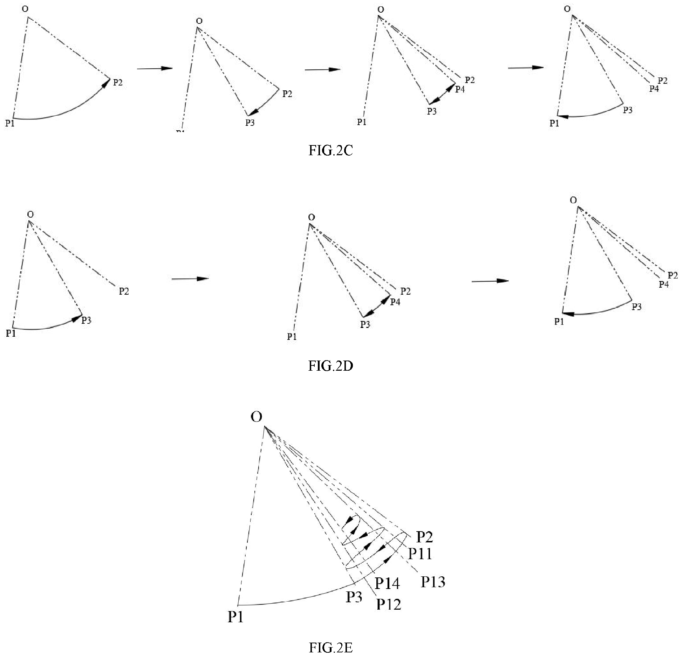

Wherein, both boundaries of the swing range are located between a line connecting the first position and a swing center and a line connecting the second position and the swing center, and are spaced apart from the first position and the second position. Please refer to FIG.2C. After controlling, based on the grass unloading instruction, the grass collection box to rotate along the first direction from the first position P1 to the second position P2, the grass collection apparatus controls the grass collection box to rotate along the second direction from the second position P2 to the third position P3. When determining that the grass collection box rotates to the third position P3, the grass collection apparatus controls the grass collection box to swing between the third position P3 and the fourth position P4. Please refer to FIG.2D. The grass collection apparatus controls, based on the grass unloading instruction, the grass collection box to rotate along the first direction from the first position P1 to the third position P3. When determining that the grass collection box rotates to the third position P3, the grass collection apparatus controls the grass collection box to swing between the third position P3 and the fourth position P4. Finally, the grass collection apparatus controls the grass collection box to perform a closing movement, that is, controlling the grass collection box to rotate from the third position P3 to the first position P1; or, controlling the grass collection box to rotate from the fourth position P4 to the first position P1.

In a possible implementation, the controlling the grass collection box to swing within the determined swing range comprises: counting the number of swing reversals of the grass collection box within the swing range; and ,based on a correspondence between the number of reversals and a swing amplitude ,the grass collection box to swing within the swing range with a swing amplitude corresponding to a current number of reversals. In this way, a swing frequency of the grass collection box can be increased, a vibration force on the grass collection box is increased, and the grass unloading effect and grass unloading efficiency are improved.

It should be noted that after the grass collection box starts to swing from the swing starting position along the first direction or the second direction, the number of times of reversing is recorded as one time. The more the number of times of reversing, the larger the swing amplitude; conversely, the fewer the number of times of reversing, the smaller the swing amplitude. Wherein, when the number of times of reversing is one time, the swing amplitude is an angle corresponding to two boundaries of the swing range.

In a possible implementation, the controlling the grass collection box to swing within the swing range comprises: in response to determining that a current swing amplitude is less than or equal to a preset swing amplitude, controlling the grass collection box to swing within the swing range according to the current swing amplitude. In this way, problems of damage to the motor or the grass collection box caused by an excessively high swing frequency of the grass collection box due to an excessive number of times of reversing can be avoided.

Please refer to FIG.2E. Exemplarily, in this embodiment, the second position P2 is configured as the swing starting position, and the swing range is an area corresponding to lines connecting the second position P2 and the third position P3 with the swing center O. The swing range further comprises a plurality of intermediate positions located between the second position P2 and the third position P3. For example, the plurality of intermediate positions are a first intermediate position P11, a second intermediate position P12, a third intermediate position P13, and a fourth intermediate position P14, respectively. The grass collection apparatus controls, based on the grass unloading instruction, the grass collection box to rotate along the first direction from the first position P1 to the second position P2. When determining that the grass collection box is located at the second position P2, the grass collection apparatus controls the grass collection box to rotate along the second direction from the second position P2 to the third position P3, then controls the grass collection box to swing between the third position P3 and the first intermediate position P11 along the first direction, controls the grass collection box to swing between the first intermediate position P11 and the second intermediate position P12 along the second direction, then controls the grass collection box to swing between the second intermediate position P12 and the third intermediate position P13 along the first direction, and controls the grass collection box to swing between the third intermediate position P13 and the fourth intermediate position P14 along the second direction. It can be understood that the swing amplitude of the grass collection box attenuates as the number of times of reversing increases. When the swing amplitude is smaller than or equal to a preset swing amplitude, for example, the angle connecting the third intermediate position P13 and the fourth intermediate position P14 with the swing center O is smaller than or equal to the preset swing amplitude, controlling the grass collection box to swing back and forth between the third position P13and the fourth position P14. Finally, the grass collection apparatus controls the grass collection box to perform a closing movement, that is, controlling the grass collection box to rotate from the third intermediate position P13 or the fourth intermediate position P14 to the first position P1.

In a possible implementation, the swing parameter further comprises a swing speed, and the swing speed is equal to an opening speed of the grass collection box. Thus, on one hand, the grass collection box can alternately rotate in the first direction and the second direction and generate inertial forces in different directions to shake the grass collection box, so that the grass clippings attached in the grass collection box can be shaken off under the action of gravity and the shaking force; on the other hand, there is no need to change the rotation speed of the driving mechanism, which reduces control difficulty of the driving mechanism, simplifies program instructions of the grass collection apparatus, and reduces management difficulty.

In a possible implementation, the swing parameter further comprises a swing speed, and the swing speed is greater than an opening speed of the grass collection box, so that kinetic energy of the grass collection box in swinging is increased, the work done to overcome inertial resistance during the reversing movement of the grass collection box is more, so that the shaking effect of the grass collection box under the influence of inertial forces in different directions is improved, and the grass unloading effect and grass unloading efficiency are further improved.

In a possible implementation, the swing range comprises a first boundary far from the second position and a second boundary near the second position, and controlling the grass collection box to swing within the determined swing range comprises: determining the angle of the second boundary relative to the second position; and controlling the grass collection box to swing within the swing range based on a pre-defined correspondence between the angle and the swing speed of the grass collection box, the swing speed being determined according to the current angle of the second boundary relative to the second position. Wherein, the closer the second boundary is to the second position, the smaller the swing speed; the closer the second boundary is to the first position, the larger the swing speed, so as to ensure that the grass collection apparatus has good grass unloading effect and grass unloading efficiency while reducing energy consumption of the driving mechanism.

In a possible implementation, the swing range comprises a first boundary far from the second position and a second boundary near the second position, and controlling the grass collection box to swing within the determined swing range comprises: controlling the grass collection box to rotate from the first boundary toward the second boundary at a first speed; and controlling the grass collection box to rotate from the second boundary toward the first boundary at a second speed, wherein the first speed is less than the second speed. Thus, since an angle of the first boundary relative to the first position is greater than an angle of the second boundary relative to the second position, by controlling the first speed to be greater than the second speed, when the grass collection box moves downwards to an extreme position at a relatively large speed, the grass collection box can generate a relatively large shaking force under the action of kinetic energy and speed, improving the grass unloading effect and grass unloading efficiency; and avoiding damaging components such as the grass collection box and the driving mechanism due to the grass collection box continuing to move upwards when moving upwards to an extreme position at a relatively large speed. Exemplarily, in this embodiment, the grass collection apparatus can control the rotation speed of the grass collection box by controlling the rotation speed of the driving mechanism. In some embodiments, the grass collection apparatus can also control the opening movement and swing of the grass collection box through different driving structures. In a possible implementation, the first speed is equal to the second speed, so that there is no need to adjust the rotation speed of the driving mechanism, only rotating the driving mechanism forward and backward needs to be controlled, which reduces control difficulty of the driving mechanism and improves reliability of rotation of the grass collection box.

In a possible implementation, before controlling the grass collection box to swing based on the swing parameter, the method comprises: upon determining that the grass collection box is at the swing starting position, obtaining distribution data of grass clippings in the grass collection box, wherein the distribution data comprises at least one of a mass distribution parameter and a morphology distribution parameter; and obtaining the swing parameter based on the distribution data and the swing starting position.

Wherein, morphology distribution data may include, but is not limited to, a total area of distribution of grass clippings in the grass collection box, locations of distribution of grass clippings, etc. Based on the distribution data of grass clippings, a residual grass amount in the grass collection box is estimated, and then various parameters of swinging are determined based on the residual grass amount, so as to ensure the grass unloading effect and grass unloading efficiency, and reduce energy consumption of swinging of the grass collection apparatus. In some embodiments, the grass collection apparatus can pre-establish a correspondence between distribution parameters and swing parameters. When the grass collection apparatus performs grass unloading, swing parameters corresponding to current distribution data of the grass collection box at the swing starting position are obtained, and swinging is performed based on the swing parameters. For example, when the residual grass amount in the grass collection box is relatively large, parameters such as the swing speed and the number of times of swinging can be increased and/or the swing angle can be decreased; when the residual grass amount in the grass collection box is relatively small, parameters such as the swing speed and the number of times of swinging can be decreased and/or the swing angle can be increased. It can be understood that the smaller the swing angle, the larger a reversing frequency of the grass collection box, so that a shaking frequency of the grass collection box can be increased, and the grass unloading effect and grass unloading efficiency can be improved.

In a possible implementation, a setting manner of the swing parameter can be, but is not limited to, a specific parameter value manually input or voice-input by the user, or a parameter value option preset by the system and selected by the user by sliding or clicking, etc., which is not specifically limited in the present disclosure.

In a possible implementation, the controlling the grass collection box to swing based on a swing parameter comprises: controlling the grass collection box to perform a reciprocating swing according to the swing parameter, so as to simplify algorithm difficulty and improve swing stability. It can be understood that the reciprocating swing refers to movements back and forth between a first boundary and a second boundary of the swing range, and a displacement of the reciprocating motion is equal to zero.

In a possible implementation, the grass collection apparatus is connected to a rear part of a lawn mowing device, and controlling the grass collection box to swing based on the swing parameter comprises: controlling the lawn mowing device and the grass collection apparatus to move rearward. Thus, based on cooperation between a backward movement of the lawn mowing device and the swing of the grass collection box, a shaking force generated by the grass collection box under the action of inertia is increased, the grass unloading efficiency and grass unloading effect are improved, and thereby manual feeding operations are saved.

In a possible implementation, the method further comprises: obtaining a closing instruction; and controlling the grass collection box to rotate along a second direction to the first position based on the closing instruction. Thus, next grass collection and grass unloading operations of the grass collection apparatus are realized, and a phenomenon of the grass collection box scratching external objects is reduced.

It can be understood that after the lawn mowing device completes the grass unloading task, the closing instruction is generated. After the lawn mowing device completes the grass unloading task, the closing instruction is sent to the control unit of the grass collection apparatus to implement a closing task of the grass collection apparatus. Completing the grass unloading task may include the lawn mowing device stopping the grass unloading task; or, the grass collection box completing the grass unloading operation of the preset swing parameter; or, the residual amount of grass clippings in the grass collection box being smaller than or equal to a preset threshold, etc., which is not limited in the embodiments of the present disclosure. Thus, an intelligent grass unloading function of the grass collection apparatus is realized.

In a possible implementation, the method further comprises: upon the grass collection box having swung a preset number of times, generating the closing instruction. Thus, intelligence of the grass unloading operation of the grass collection apparatus is realized, and the grass unloading efficiency is improved.

In a possible implementation, the method further comprises: obtaining image data of a designated area of the grass collection box, and generating the closing instruction in response to the image data. Wherein, the grass collection apparatus may include a video sensor, the video sensor is configured to obtaining image data in the grass collection box, and analyzing and identifying the residual amount of grass clippings in the grass collection box based on the image data, so as to better ensure the grass unloading effect and grass unloading efficiency of the grass collection apparatus.

In a possible implementation, the method further comprises: in response to a user canceling the swing of the grass collection box, generating the closing instruction. Thus, the grass collection apparatus does not need to be provided with an extra video sensor or other sensors, simplifying overall structural design, simplifying program instructions of the grass collection apparatus, and reducing production costs; at the same time, the grass unloading effect and grass unloading efficiency of the grass collection apparatus are ensured based on the swing of the grass collection apparatus.

In a possible implementation, before the obtaining the closing instruction, the control method further comprises: responsive to a closing operation for the grass collection box by the user, generating the closing instruction.

In a possible implementation, the closing instruction can also be jointly determined by the grass collection apparatus and the user. For example, after the grass collection apparatus initially determines that the grass collection box needs to perform the closing operation according to the above manner, a prompt message is sent to the user, and then the user confirms whether to perform the closing operation for the grass collection box. The prompt message is used to prompt the user whether to start the closing operation of the grass collection box. The prompt message may include one or more of a sound signal, an optical signal, text information, or vibration information. The embodiment of the present disclosure does not limit this. Based on the user discovering that grass clippings still remain after swinging of the grass collection box, the user can trigger the grass collection apparatus to perform swinging again, so as to shake off the grass clippings in the grass collection box, thereby improving flexibility of use of the grass collection apparatus.

In a possible implementation, the controlling the grass collection box to swing based on a swing parameter comprises: controlling the grass collection box to swing based on the swing parameter, and controlling a vibrator to shake the grass collection box.

It can be understood that a shaking operation of the vibrator on the grass collection box and the swing of the grass collection box can be executed synchronously, so that the grass clippings attached in the grass collection box can be shaken off more effectively. In some embodiments, the shaking operation of the vibrator on the grass collection box can also be executed alternately with the swing of the grass collection box.

According to the control method of the grass collection apparatus provided by the embodiments of the present disclosure, on one hand, the opening movement of the grass collection box of the grass collection apparatus is triggered based on the grass unloading instruction, so that most grass clippings in the grass collection box are automatically unloaded under the action of gravity; on the other hand, after the opening movement is completed, the grass collection box is controlled to swing according to a preset angle based on a swing instruction, so that inertial forces in different directions are generated during the reciprocating rotation of the grass collection box, and shaking of the grass collection box is realized through the inertial forces, so that the grass clippings attached in the grass collection box can be quickly shaken off, avoiding incomplete grass unloading, improving grass unloading efficiency and grass unloading effect, and thereby saving manual feeding operations.

The devices involved in the embodiments of the present disclosure are introduced below in conjunction with the drawings.

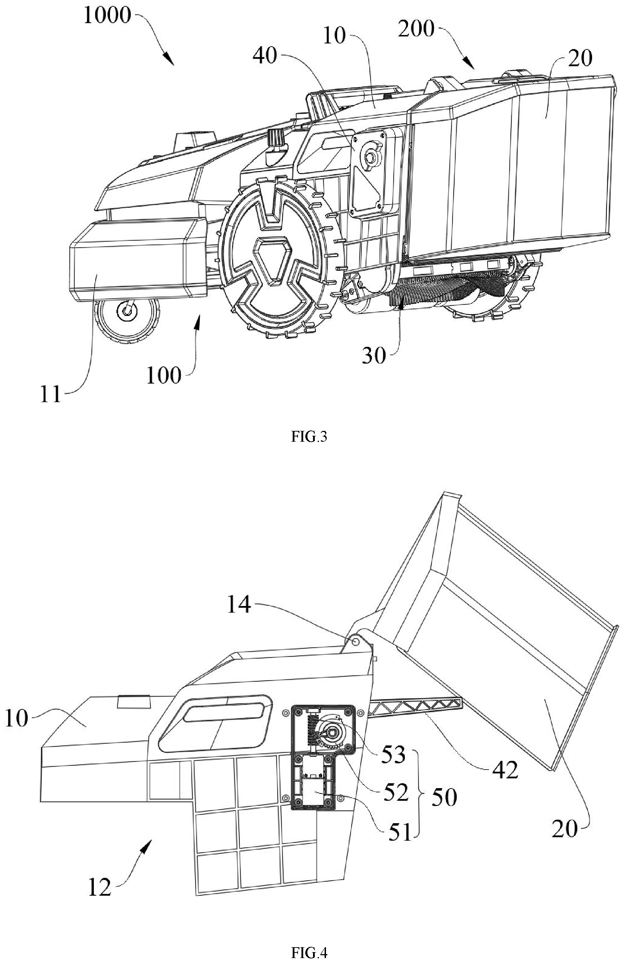

Please refer to FIG.3. FIG.3 is a structural schematic diagram of a lawn mowing system 1000 according to an embodiment of the present disclosure. The lawn mowing system 1000 comprises a lawn mowing device 100 and a grass collection apparatus 200. Exemplarily, in this embodiment, the grass collection apparatus 200 is installed at a rear part of the lawn mowing device 100. The grass collection apparatus 200 and the lawn mowing device 100 can be detachably connected together through structures such as screws and buckles. The grass collection apparatus 200 and the lawn mowing device 100 can also be non-detachably connected together through manners such as welding and bonding. The lawn mowing device 100 may include, but is not limited to, a walk-behind, a ride-on, and a fully automatic intelligent lawn mowing device 100, etc., which is not limited in the present disclosure. The lawn mowing device 100 can move on the ground. For example, the lawn mowing device 100 can move on the ground under the push of a user. For another example, the lawn mowing device 100 itself has a moving capability, and can automatically move on the ground through a driving mechanism 50. The lawn mowing device 100 comprises, but is not limited to, a machine body 11, a cutting mechanism, a lifting mechanism, etc. The grass collection apparatus 200 is disposed at a rear part of the machine body 11. The cutting mechanism and the lifting mechanism are disposed on the machine body 11. The lifting mechanism is configured to driving the cutting mechanism to move along a height direction of the lawn mowing device 100. The cutting mechanism is configured to cutting a lawn.

Please refer to FIG.3 to FIG.5 together. The grass collection apparatus 200 comprises a main body 10, a grass collection box 20, a grass collection mechanism 30, a flipping mechanism 40, and a driving mechanism 50. The main body 10 is connected to the machine body 11 of the lawn mowing device 100. The main body 10 is provided with an accommodating cavity 12. A top part of the grass collection box 20 is rotatably connected to a rear part of the main body 10. The top part of the grass collection box 20 can be rotatably connected to the rear part of the main body 10 through a rotating structure 14. The rotating structure 14 may include, but is not limited to, a hinge, a rotating shaft 41, etc. The grass collection mechanism 30 is disposed in the accommodating cavity 12 and is configured to collecting grass clippings cut by the cutting mechanism of the lawn mowing device to the grass collection box 20. The grass collection mechanism 30 is, for example, but not limited to, a roller brush. The grass collection apparatus 200 has a grass collection mode and a grass unloading mode. In the grass collection mode, the grass collection box 20 covers the main body 10, and the grass collection box 20 can be configured to temporarily storing grass clippings cut by the lawn mowing device 100; in the grass unloading mode, the grass collection box 20 is flipped relative to the main body 10 so as to dump the grass clippings collected in the grass collection box 20. The flipping mechanism 40 is disposed on a side wall of the main body 10 and is configured to flipping the grass collection box 20 to dump the grass clippings collected in the grass collection box 20, thereby realizing an automatic grass unloading function of the grass collection apparatus 200 and providing grass unloading efficiency. In this embodiment, the flipping mechanism 40 is disposed at the rear part of the main body 10, thereby facilitating alignment and assembly of the flipping mechanism 40 and the grass collection box 20, and better realizing flipping performance of the flipping mechanism 40. The driving mechanism 50 is disposed on the side wall of the main body 10 and is configured to driving the flipping mechanism 40 to rotate synchronously with the grass collection box 20, thereby realizing opening movement, swinging movement, and closing movement of the grass collection box 20.

The driving mechanism 50 comprises a driving member 51 and a transmission mechanism. The driving member 51 is configured to driving the transmission mechanism to rotate, and driving the flipping mechanism 40 together with the grass collection box 20 to flip. Exemplarily, in this embodiment, the transmission mechanism comprises a worm 53 and a worm gear 52 meshing with the worm 53, and the worm 53 is drivingly connected to the driving member 51 and the worm gear 52. One end of the flipping mechanism 40 is fixed to the worm gear 52, and the other end of the flipping mechanism 40 is in contact with the grass collection box 20. The flipping mechanism 40 is configured to driving the grass collection box 20 to flip. In some embodiments, the transmission mechanism comprises a plurality of gears.

The flipping mechanism 40 comprises the rotating shaft 41 drivingly connected to the worm gear 52 and a push rod 42 fixed on the rotating shaft 41. The rotating shaft 41 rotates synchronously with the worm gear 52 so as to drive the push rod 42 together with the grass collection box 20 to flip. The flipping mechanism 40 further comprises a pointer 43 fixed on the rotating shaft 41, so as to realize synchronous rotation of the pointer 43 and the push rod 42 to indicate a flipping angle of the grass collection box 20. The pointer 43 and the push rod 42 are disposed at opposite ends of the rotating shaft 41, thereby optimizing an overall structural design.

In some embodiments, the grass collection apparatus 200 further comprises a sensing member 80. The sensing member 80 is configured to sensing a rotation position of the pointer 43 relative to the main body 10 and generating a sensing signal, so as to control driving work of the driving member 51, thereby realizing precise control of the opening angle of the grass collection box 20, avoiding problems such as transmission failure or transmission gaps in the transmission mechanism that reduce user experience, and at the same time avoiding damaging the grass collection box 20 and the transmission mechanism, and improving reliability and safety of automatic flipping of the grass collection box 20.

The sensing member 80 comprises a first sensing member 810 and a second sensing member 820. The first sensing member 810 is disposed on the pointer 43, and the second sensing member 820 is disposed on the main body 10. It should be noted that an opening and closing angle of the pointer 43 relative to the main body 10 is equal to the flipping angle of the grass collection box 20 relative to the main body 10. One of the first sensing member 810 and the second sensing member 820 is configured as an induction body, and the other one is configured as a sensor, the sensor being configured to sensing the induction body. Exemplarily, in this embodiment, the first sensing member 810 is configured as the induction body, and the second sensing member 820 is configured as the sensor. The sensor may include, but is not limited to, a first sensor 81, a second sensor 82, and a third sensor 83. The first sensor 81 is configured to generate a first position signal when sensing that the grass collection box 20 rotates to the first position. The second sensor 82 is configured to generate a second position signal when sensing that the grass collection box 20 rotates to the second position. The third sensor 83 is configured to generate a third position signal when sensing that the grass collection box 20 rotates to a third position. Wherein, the third position is spaced apart from the first position and the second position, and is located between the first position and the second position. In this embodiment, the first sensor 81, the second sensor 82, and the third sensor 83 are all configured as Hall sensors. In some other embodiments, the sensor may also include, but is not limited to, a distance sensor, an optocoupler sensor, a pressure sensor, etc. The distance sensor comprises, but is not limited to, a displacement sensor, a proximity sensor, an ultrasonic sensor, etc.

It can be understood that in some embodiments, the sensor may also include a fourth sensor. The fourth sensor is configured to generate a fourth position signal when sensing that the grass collection box 20 rotates to a fourth position. Wherein, the fourth position is located between the third position and the second position or is located between the first position and the third position. The number of sensors can be designed according to actual situations, which is not specifically limited in the present disclosure. The sensor can be configured to sensing the position of the grass collection box 20 to determine the rotation angle of the grass collection box 20.

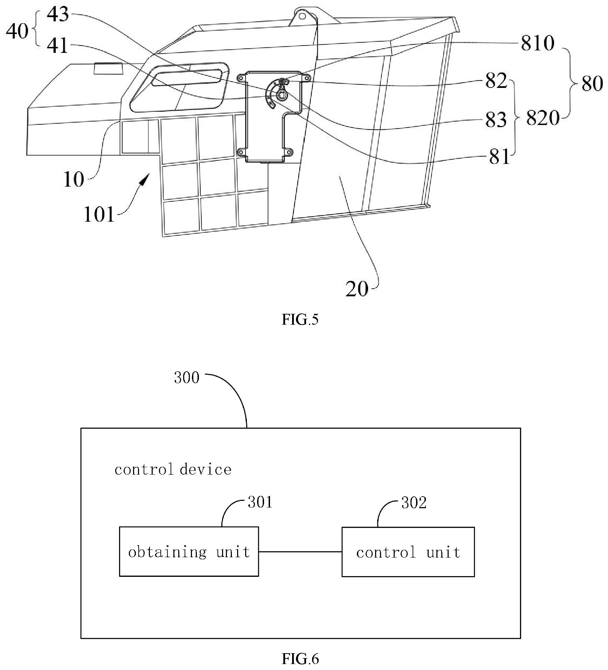

Please refer to FIG.6. FIG.6 is a block diagram of unit composition of a control device 300 of a grass collection apparatus 200 according to an embodiment of the present disclosure. The control device 300 of the grass collection apparatus 200 may include an obtaining unit 301 and a control unit 302. The obtaining unit 301 is configured to obtaining a grass unloading instruction and a swing instruction. The control unit 302 is configured to: trigger, based on the grass unloading instruction, an opening movement of the grass collection box 20 of the grass collection apparatus 200, and control the grass collection box 20 to rotate along a first direction from a first position toward a second position; wherein the first position is a position where the grass collection box 20 is in a closed state, and the second position is a position where the grass collection box 20 reaches a maximum opening angle. The control unit 302 is further configured to control, based on the swing instruction, the grass collection box 20 to swing according to a preset angle; wherein the preset angle is smaller than the maximum opening angle.

The control unit 302 is further configured to complete opening movement, swing movement, and closing movement of the grass collection box 20 according to the control method corresponding to FIG.1.

It should be noted that for specific functional implementations of the grass collection apparatus 200, reference can be made to the method steps corresponding to FIG. 1, and details are not repeatedly described here.

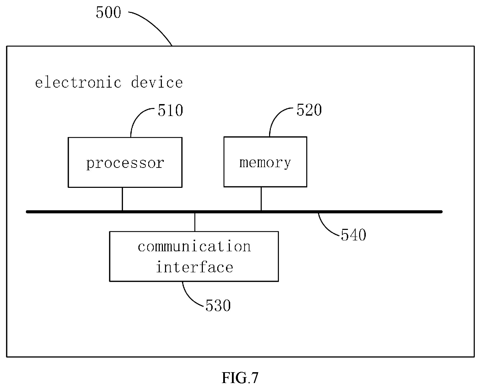

Please refer to FIG.7. FIG.7 is a block diagram of unit composition of an electronic device 500 according to an embodiment of the present disclosure. The electronic device 500 may include, but is not limited to, a processor 510 and a memory 520. The processor 510 and the memory 520 are connected to each other. In some embodiments, the electronic device 500 further comprises a communication interface 530. The processor 510, the memory 520, and the communication interface 530 are connected through a bus 540, and the memory 520 is configured to storing a computer program. The computer program comprises program instructions. The processor 510 is configured to calling the program instructions stored in the memory 520 to perform various steps of the control method as corresponding to FIG. 1.

The processor 510 is configured to executing instructions stored in the memory 520 to control the communication interface 530 to receive and send signals to complete the steps in the above method. Wherein, the memory 520 can be integrated in the processor 510, and can also be disposed separately from the processor 510.

As an implementation, functions of the communication interface 530 can be implemented through a transceiver circuit or a dedicated transceiver chip. The processor 510 can be implemented through a dedicated processing chip, a processing circuit, the processor 510, or a general-purpose chip.

As another implementation, a manner of a general-purpose computer can be considered to implement the electronic device 500 provided by the embodiments of the present disclosure. That is, program code implementing functions of the processor 510 and the communication interface 530 is stored in the memory 520, and the general-purpose processor 510 implements the functions of the processor 510 and the communication interface 530 by executing the code in the memory 520.

Concepts, explanations, detailed descriptions, and other steps related to the technical solutions provided by the embodiments of the present disclosure involved in the electronic device 500 can be found in descriptions related to the method steps performed by the device in the foregoing methods or other embodiments, and details are not repeatedly described here.

As another implementation of the present embodiment, a non-transitory computer-readable storage medium is provided. The non-transitory computer-readable storage medium stores a computer program. The computer program comprises program instructions. The program instructions, when executed by the processor 510, cause the processor 510 to perform the control method in the above method embodiments.

As another implementation of the present embodiment, a computer program product comprising instructions is provided, which, when executed, performs the method in the above method embodiments.

Those skilled in the art can understand that for ease of description, only one memory 520 and one processor 510 are shown in FIG.7. In an actual terminal or server, there may be a plurality of processors 510 and memories 520. The memory 520 can also be called a storage medium, a storage device, etc., which is not limited in the embodiments of the present disclosure.

It can be understood that in the embodiments of the present disclosure, the processor 510 may be a Central Processing Unit (CPU), and the processor 510 may also be other general-purpose processors, Digital Signal Processors (DSPs), Disclosure Specific Integrated Circuits (ASICs), Field-Programmable Gate Arrays (FPGAs), or other programmable logic devices, discrete gates or transistor logic devices, discrete hardware components, etc. A general-purpose processor can be a microprocessor or the processor 510 can also be any conventional processor, etc. The processor 510 is a control center of the electronic device 500, connecting various parts of the entire electronic device 500 using various interfaces and lines.

Those skilled in the art should understand that FIG.7 is only an example of the electronic device 500 and does not constitute a limitation on the electronic device 500. The electronic device 500 may include more or fewer components than those shown in FIG.7, or combine some components, or have different components. For example, the electronic device 500 may also include input/output devices, network access devices, etc.

The memory 520 mentioned in the embodiments of the present disclosure may be a volatile memory or a non-volatile memory, or may include both volatile and non-volatile memories. Wherein, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external high-speed cache. By way of exemplary but not limiting description, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM).

It should be noted that when the processor 510 is a general-purpose processor, DSP, ASIC, FPGA, or other programmable logic device, discrete gate or transistor logic device, or discrete hardware component, the memory 520 (storage module) is integrated in the processor 510.

It should be noted that the memory 520 described herein is intended to include, but is not limited to, these and any other suitable types of memory.

In addition to a data bus, the bus 540 may also include a power bus, a control bus, a status signal bus, etc. However, for clarity of description, various buses are labeled as the bus 540 in the figure.

In the implementation process, each step of the above methods can be completed by integrated logic circuits of hardware in the processor 510 or instructions in the form of software. Steps of the methods disclosed in conjunction with the embodiments of the present disclosure can be directly embodied as being executed and completed by a hardware processor 510, or executed and completed by a combination of hardware and software modules in the processor 510. The software modules can be located in mature storage media in the field such as random access memory, flash memory, read-only memory, programmable read-only memory, or electrically erasable programmable memory, registers, etc. The storage medium is located in the memory 520, the processor 510 reads information in the memory 520, and completes the steps of the above control method in combination with its hardware.

In various embodiments of the present disclosure, the size of serial numbers of the above processes does not mean an execution order. The execution order of each process should be determined by its function and internal logic, and should not constitute any limitation on the implementation process of the embodiments of the present disclosure.

Those of ordinary skill in the art can realize that various illustrative logical blocks (ILBs) and steps described in conjunction with the embodiments disclosed herein can be implemented by electronic hardware, or a combination of computer software and electronic hardware. Whether these functions are executed in the form of hardware or software depends on the specific disclosure and design constraints of the technical solution. Professional technicians can use different methods for each specific disclosure to realize the described functions, but such implementation should not be considered as going beyond the scope of the present disclosure.

In the several embodiments provided by the present disclosure, it should be understood that the disclosed system, apparatus, and method can be implemented in other ways. For example, the apparatus embodiments described above are only illustrative. For example, division of units is only a logical function division, and there may be other division manners in actual implementation. For example, multiple units or components can be combined or integrated into another system, or some features can be ignored or not executed. Another point is that the mutual coupling or direct coupling or communication connection displayed or discussed may be indirect coupling or communication connection through some interfaces, apparatuses, or units, and may be in electrical, mechanical, or other forms.

Units described as separate components may or may not be physically separate, and components displayed as units may or may not be physical units, that is, they can be located in one place, or can be distributed on multiple network units. Part or all of the units can be selected according to actual needs to achieve the objective of the solution of this embodiment.

In addition, each functional unit in each embodiment of the present disclosure can be integrated in one processing unit, or each unit can exist physically separately, or two or more units can be integrated in one unit.

In the above embodiments, it can be implemented in whole or in part through software, hardware, firmware, or any combination thereof. When implemented using software, it can be implemented in whole or in part in the form of a computer program product. The computer program product comprises one or more computer instructions. When the computer instructions are loaded and executed on a computer, the processes or functions according to the embodiments of the present disclosure are generated in whole or in part. The computer can be a general-purpose computer, a special-purpose computer, a computer network, or other programmable devices. The computer instructions can be stored in a computer-readable storage medium, or transmitted from one computer-readable storage medium to another computer-readable storage medium. For example, the computer instructions can be transmitted from a website station, computer, server, or data center through a wired manner (for example, coaxial cable, optical fiber, Digital Subscriber Line (DSL)) or a wireless manner (for example, infrared, wireless, microwave, etc.) to another website station, computer, server, or data center. The computer-readable storage medium can be any available medium that can be accessed by a computer, or a data storage device such as a server or a data center integrated by one or more available media. The available medium can be a magnetic medium (for example, floppy disk, hard disk, magnetic tape), an optical medium (for example, DVD), or a semiconductor medium (for example, solid state disk), etc.

The embodiments of the present disclosure have been introduced in detail above. Specific examples are applied in this article to elaborate the principles and implementation modes of the present disclosure. Description of the above embodiments is only used to help understand the methods and core ideas of the present disclosure. At the same time, for those of ordinary skill in the art, there will be changes in the specific implementation modes and disclosure scope based on the ideas of the present disclosure. In summary, the content of this specification should not be understood as a limitation on the present disclosure.

## Claims

1. A method for controlling a grass collection apparatus, comprising:
receiving an unloading instruction;
controlling, in response to the unloading instruction, a grass collection box to move from a first position to a second position along a first direction, wherein the first position corresponds to a closed state of the grass collection box, and the second position corresponds to a maximum opening angle of the grass collection box; and
controlling the grass collection box to swing based on a swing parameter, wherein the swing parameter comprises at least a swing angle, and the swing angle is less than the maximum opening angle.

2. The method according to claim 1, wherein controlling, in response to the unloading instruction, the grass collection box to move from the first position to the second position along a first direction comprises:
controlling the grass collection box to rotate from the first position to the second position along the first direction; or
controlling the grass collection box to rotate from the first position to a third position along the first direction;
wherein the third position is located between the first position and the second position and is different from both the first position and the second position.

3. The method according to claim 1, wherein controlling the grass collection box to swing based on the swing parameter comprises:
upon determining that the grass collection box is at a swing starting position, controlling the grass collection box to swing based on the swing parameter.

4. The method according to claim 3, wherein the upon determining that the grass collection box is at a swing starting position comprises:
in response to receiving an opening operation of turning on a swing switch member by a user, determining that the grass collection box is located at the swing starting position; or
in response to detecting that the grass collection box has rotated to the second position, determining that the grass collection box is located at the swing starting position; or
in response to detecting that the grass collection box has rotated to the second position, controlling the grass collection box to rotate along a second direction from the second position to a third position; and in response to detecting that the grass collection box has rotated to the third position, determining that the grass collection box is at the swing starting position, wherein the second direction is opposite to the first direction, and the third position is between the first position and the second position and is different from both the first position and the second position ;
in response to failing to detect that the grass collection box has rotated to the second position and upon detecting that the grass collection box has rotated to the third position, determining that the grass collection box is located at the swing starting position.

5. The method according to claim 3, wherein controlling the grass collection box to swing based on the swing parameter comprises:
determining a swing range based on the swing starting position and the swing angle; and
controlling the grass collection box to swing within the determined swing range.

6. The method according to claim 5, wherein controlling the grass collection box to swing within the determined swing range comprises:
controlling the grass collection box to swing between the second position and a third position; or
controlling the grass collection box to swing between a third position and a fourth position;
wherein the third position is located between the first position and the second position and is different from both the first position and the second position, and the fourth position is located between the second position and the third position or between the first position and the third position.

7. The method according to claim 5, wherein controlling the grass collection box to swing within the determined swing range comprises:
counting the number of swing reversals of the grass collection box within the swing range; and
controlling, based on a correspondence between the number of reversals and a swing amplitude, the grass collection box to swing within the swing range with a swing amplitude corresponding to a current number of reversals.

8. The method according to claim 7, wherein controlling the grass collection box to swing within the swing range based on the current number of reversals and a corresponding swing amplitude comprises:
in response to determining that a current swing amplitude is less than or equal to a preset swing amplitude,
controlling the grass collection box to swing within the swing range according to the current swing amplitude.

9. The method according to any one of claims 1 to 8, wherein the swing angle is in a range of 3° to 45°.

10. The method according to claim 9, wherein the swing angle is 10°.

11. The method according to any one of claims 1 to 8, wherein the swing parameter further comprises a swing speed, and the swing speed is greater than or equal to an opening speed of the grass collection box.

12. The method according to claim 6, wherein the swing range comprises a first boundary far from the second position and a second boundary near the second position, and controlling the grass collection box to swing within the determined swing range comprises:
determining the angle of the second boundary relative to the second position; and
controlling the grass collection box to swing within the swing range based on a pre-defined correspondence between the angle and the swing speed of the grass collection box, the swing speed being determined according to the current angle of the second boundary relative to the second position.

13. The method according to claim 6, wherein the swing range comprises a first boundary far from the second position and a second boundary near the second position, and controlling the grass collection box to swing within the determined swing range comprises:
controlling the grass collection box to rotate from the first boundary toward the second boundary at a first speed; and
controlling the grass collection box to rotate from the second boundary toward the first boundary at a second speed, wherein the first speed is less than or equal to the second speed.

14. The method according to claim 3, wherein before controlling the grass collection box to swing based on the swing parameter, the method comprises:
in response to determining that the grass collection box is at the swing starting position, obtaining distribution data of grass clippings in the grass collection box, wherein the distribution data comprises at least one of a mass distribution parameter and a morphology distribution parameter; and
obtaining the swing parameter based on the distribution data and the swing starting position.

15. The method according to any one of claims 1 to 8, wherein controlling the grass collection box to swing based on the swing parameter comprises:
controlling the grass collection box to perform a reciprocating swing according to the swing parameter.

16. The method according to any one of claims 1 to 8, wherein the grass collection apparatus is connected to a rear part of a lawn mowing device, and controlling the grass collection box to swing based on the swing parameter comprises:
controlling the lawn mowing device and the grass collection apparatus to move rearward.

17. The method according to any one of claims 1 to 8, wherein the method further comprises:
obtaining a closing instruction; and
controlling the grass collection box to rotate along a second direction to the first position based on the closing instruction.

18. The method according to claim 17, wherein the method further comprises:
in response to the grass collection box having swung a preset number of times, generating the closing instruction; or
obtaining image data of a designated area of the grass collection box, and generating the closing instruction in response to the image data; or
in response to a user canceling the swing of the grass collection box, generating the closing instruction.

19. The control method according to any one of claims 1 to 8, wherein before receiving an unloading instruction, the method further comprises:
in response to the lawn mowing device completing a lawn mowing task, generating the grass unloading instruction; or
in response to a detector detecting that a grass collection parameter of the grass collection box satisfies a preset parameter, generating the grass unloading instruction; or
in response to a user operating the grass unloading switch to open, generating the grass unloading instruction.

20. The method according to any one of claims 1 to 8, wherein controlling the grass collection box to swing according to the swing parameter comprises controlling the grass collection box to swing according to the swing parameter and controlling a vibrator to shake the grass collection box, based on the grass unloading instruction.

21. A control device for controlling a grass collection apparatus, comprising:
an obtaining unit, configured to obtain a grass unloading instruction;
and a control unit, connected to the obtaining unit;
wherein the control unit is configured to: control, based on the grass unloading instruction, a grass collection box to perform an opening movement along a first direction from a first position toward a second position;
wherein the first position is a position where the grass collection box is in a closed state, and the second position is a position where the grass collection box reaches a maximum opening angle; and
the control unit is further configured to control the grass collection box to swing according to a swing parameter; wherein the swing parameter comprises a swing angle, and the swing angle is smaller than the maximum opening angle.

22. An electronic device, comprising:
a processor; and
a memory coupled to the processor and storing instructions that, when executed by the processor, cause the processor to perform the method according to any one of claims 1 to 20.

23. A non-transitory computer-readable storage medium storing instructions that, when executed by a processor, cause the processor to perform the method according to any one of claims 1 to 20.
